# EUROPEAN PATENT SPECIFICATION

(11) **EP 2 302 880 B1**
(45) Date of publication and mention of the grant of the patent: **03.04.2019**
(21) Application number: 10011699.5
(22) Date of filing: 22.02.2006
(51) Int. Cl.: G06F 3/0482, G06F 1/16, H04M 1/725

(54) **Apparatus and method for controlling menu navigation in a terminal by using an inertial sensor in said terminal**
Vorrichtung und Verfahren zur Steuerung einer Menünavigation in einem Endgerät durch Verwendung eines Trägheitskraftsensors in dem Endgerät
Appareil et procédé pour contrôler la navigation dans un menu d'un terminal en utilisant un capteur de force d'inertie dans ce terminal

(30) Priority: 23.02.2005 KR 20050015168
(43) Date of publication of application: 30.03.2011
(62) Divisional of application: 06003630.8
(73) Proprietor: Samsung Electronics Co., Ltd., Suwon-si, Gyeonggi-do, 443-742 (KR)
(72) Inventor: Yi, Sun-Young, Suwon-si, Gyeonggi-do (KR); Han, Myoung-Hwan, Suwon-si, Gyeonggi-do (KR); Shin, Seung-Woo, Suwon-si, Gyeonggi-do (KR); Seo, Jin-Gyu, Suwon-si, Gyeonggi-do (KR); Hwang, Byeong-Cheol, Suwon-si, Gyeonggi-do (KR)
(74) Representative: Grünecker Patent- und Rechtsanwälte PartG mbB

(56) References cited:
- EP-A- 0 805 389
- EP-A- 0 825 514
- EP-A- 1 298 893
- EP-A- 1 351 119
- WO-A-01/27735
- WO-A-01/86920
- GB-A- 2 358 336

## Description

The present invention relates generally to an apparatus and method for controlling interaction between a terminal with a menu screen and a user, and in particular, to a menu navigation apparatus and method for controlling menu navigation on a menu screen in association with a user's motion.

A menu navigation method in the existing terminal shifts a menu focus upward, downward, leftward, or rightward using hardware elements such as one of a 4-direction button, a jog dial and a jog key, an OK button, and a Cancel button; shifts the menu focus to the next depth by pressing the OK button; and drops out of the corresponding menu by pressing the Cancel button.

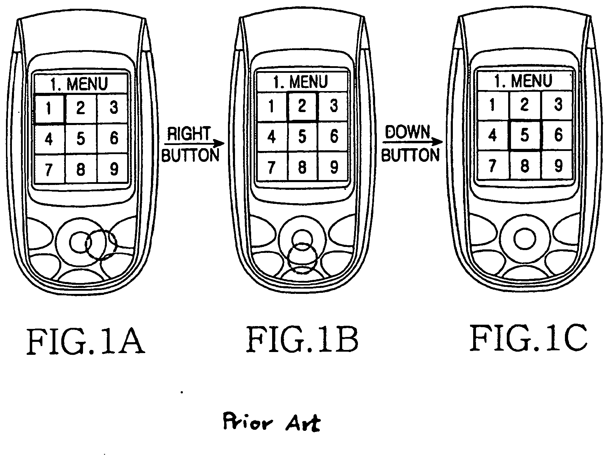

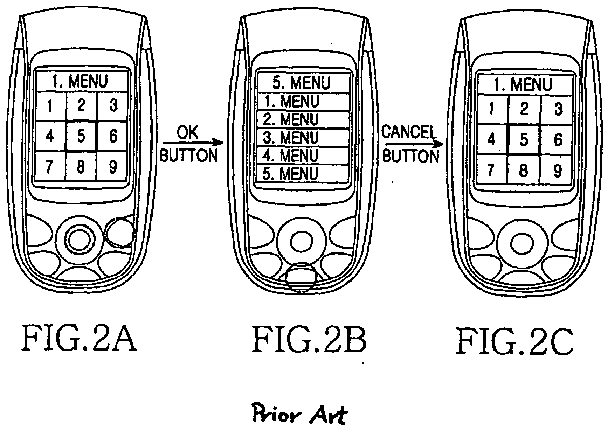

FIGs. 1A through 2C are diagrams illustrating the conventional menu focus shifting method. In order to focus on a desired menu and select the focused menu, a user should press several buttons (e.g., Right button, Down button, OK button, and Cancel button). Similarly, to enter a submenu of the selected menu, the user should press various buttons again (see FIGs. 2A through 2C). As can be appreciated, in the conventional menu focus shifting method, there is limited correlation between the button pressing and focus shifting on a menu screen. In addition, the button-controlled menu navigation method is an old-fashioned menu navigation method, which is no longer unique and advantageous in terms of function and convenience. Further, the conventional method inconveniently enters an environment setup menu in order to zoom in/out a menu screen.

WO 01/27735 describes an operation method of a user interface of a handheld device, wherein data on the display of the device is changed responsive to certain movements of the device in a three-dimensional space of use thereof and wherein said movements of the device and the corresponding changes of the data on the display are defined by having a cause-consequence relationship analogous to that of the three-dimensional space of perception and action of the user. Movements of the device are detected by an acceleration measurement circuit. Zooming of an image is described in response to moving the device perpendicularly to the display. Further, in response to lateral movement of the device in the plane of the display, data on the display is changed as if a window were moved above a larger image formed by the image data. Further, selecting data objects on the display is disclosed by moving the selection to the direction of tilting. Having selected a desired data object, it may be locked by a key on the device or by a return movement of the device.

GB-A-2 358 336 describes a portable electronic device facilitating entry of user data and commands by detecting motion of the device. A user physically moves the disclosed device to highlight and enter a desired character of data or a command. After initiation of the program, a controller subsequently generates a graphical user interface on the display showing a plurality of characters with a current character visually identified. The program then enters a motion detection loop.

WO 01/86920 describes a portable handheld device and method for the kinematic control of its function and the control of the information presented in the display of the portable device. Selection of items from a menu can be obtained by moving the entire portable device in a particular direction. Movements can also be used to control the presentation of information in the display. Moving the device closer or further from the user or in a perpendicular direction to the display will zoom the image in and out. Additional accelerometers can be used, for example, for precise measurements of rotational movements of the device.

EP-A-1 351 119 relates to an information processing terminal. A user may input various processes by inclining a PDA while depressing a control button.

EP-A-1 298 893 relates to a mobile terminal generating correspondingly adapted image contents displayed in the display dependent on a measured change in position.

EP-A-0 825 514 describes an information processing device and method for inputting information by operating the overall device with a hand. When an operation button is pushed, a menu is displayed on the screen and when the whole portable device is rotated with the operation button being pushed, the rotation is detected by a tri-axial gyro sensor and on the basis of the detection result a cursor displayed on the screen is moved on a menu. Clockwise and counter clockwise rotation around an axis is described.

EP-A-0 805 389 discloses scrolling techniques for computing devices which respond to the amount of tilt measured against the reference experienced by a control unit. The described control unit may be built into a handheld computing device.

It is, therefore, the object of the present invention to provide an improved apparatus and method for controlling menu navigation on a menu screen correlated to a user's motion and providing easy comprehension by the user.

This object is solved by the subject matter of the independent claims.

Preferred embodiments are defined in the dependent claims.
The embodiments and/or examples of the following description, which are not covered by the appended claims are considered as not being part of the present invention.

The present invention will become more apparent from the following detailed description when taken in conjunction with the accompanying drawings in which:
FIGs. 1A through 2C are diagrams illustrating the conventional menu focus shifting method;
FIGs. 3A and 3B are diagrams illustrating a first menu navigation method according to the present invention
FIGs. 4A through 4C are diagrams illustrating a second menu navigation method according to the present invention;
FIGs. 5A through 5C are diagrams illustrating a third menu navigation method according to the present invention;
FIGs. 6A through 6C are diagrams illustrating a fourth menu navigation method according to the present invention;
FIGs. 7A through 7C are diagrams illustrating a fifth menu navigation method according to the present invention;
FIG. 8 is a block diagram illustrating a structure of a menu display apparatus in a mobile communication terminal according to the present invention;
FIG. 9 is a flowchart illustrating a first menu navigation method according to the present invention;
FIG. 10 is a flowchart illustrating a second menu navigation method according to the present invention;
FIG. 11 is a flowchart illustrating a third menu navigation method according to the present invention;
FIG. 12 is a flowchart illustrating a fourth menu navigation method according to the present invention; and
FIG. 13 is a flowchart illustrating a fifth menu navigation method according to the present invention.

Several preferred embodiments of the present invention will now be described in detail with reference to the annexed drawings. In the drawings, the same or similar elements are denoted by the same reference numerals even though they are depicted in different drawings. In the following description, a detailed description of known functions and configurations incorporated herein has been omitted for clarity and conciseness.

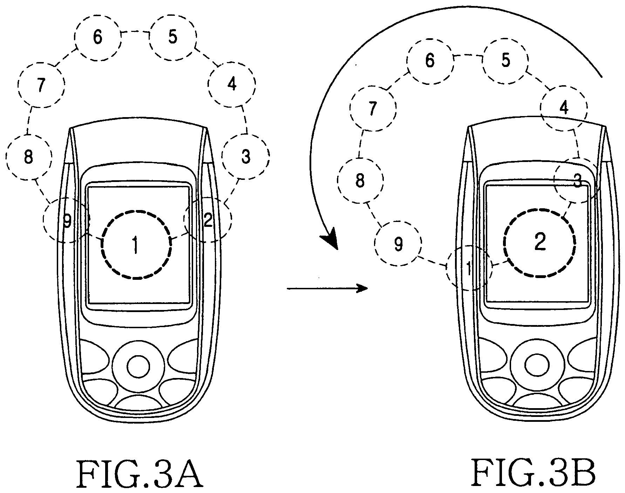

FIGs. 3A and 3B are diagrams illustrating a first menu navigation method according to the present invention. If a user turns a terminal counterclockwise, a menu focus (hereinafter simply referred to as a "focus") previously located in '1' shifts to '2' as shown in FIGs. 3A and 3B. Although not illustrated, similarly, if the user turns the terminal clockwise, the focus shifts in the opposite direction.

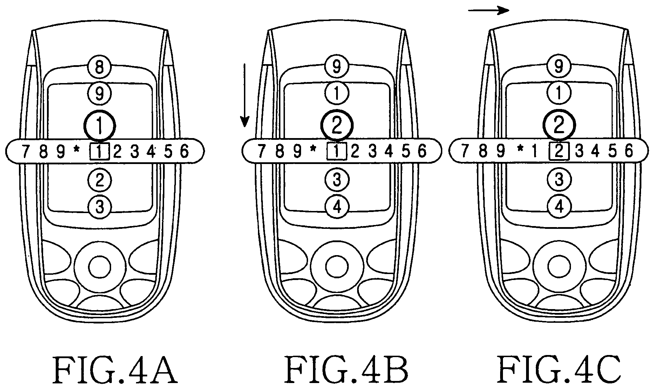

FIGs. 4A through 4C are diagrams illustrating a second menu navigation method according to the present invention. If a user shakes a terminal downward once, a focus previously located in '1' (circled-'1') shifts to '2' as shown in FIGs. 4A and 4B. This depth-#1 focus shifting accomplishes focus shifting between main menus. If the user shakes the terminal rightward once, the focus previously located in '1' (squared-'1') shifts to '2' as shown in FIGs. 4B and 4C. This depth-#2 focus shifting achieves focus shifting between items in a submenu of the main menu indicated by a circled-'2'. Although not illustrated, if the user shakes the terminal upward or leftward, the focus shifts in the same principle.

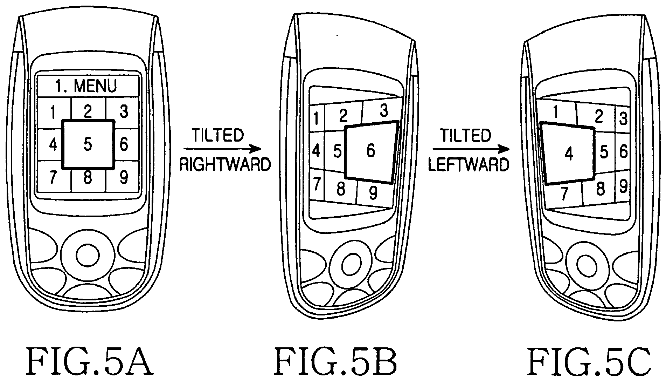

FIGs. 5A through 5C are diagrams illustrating a third menu navigation method according to the present invention. If a user tilts a terminal rightward, a focus previously located in '5' shifts to '6' as shown in FIGs. 5A and 5B. If instead the user tilts the terminal leftward, the focus previously located in '5' shifts to '4' as shown in FIGs. 5A and 5C. As illustrated, this menu navigation method displays in perspective all menu boxes including the number box where the focus is located, in such a manner that they are tilted in a corresponding direction, in order to increase a visual effect. Although not illustrated, if the user tilts the terminal upward or downwards, the focus shifts in the same principle. This menu navigation method provides a correlation between a user's motion and actual focus shifting on the menu screen, allowing the user to easily comprehend the focus shifting and experience new interaction.

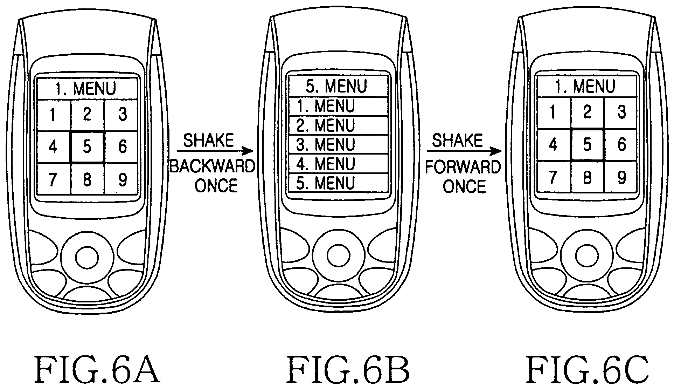

FIGs. 6A through 6C are diagrams illustrating a fourth menu navigation method according to the present invention. If a user shakes a terminal backward (or outward) once in a state where a focus is currently located in '5' as shown in FIG. 6A, the terminal displays submenus of a main menu #5 as shown in FIG. 6B. That is, the terminal goes to the next depth. In order to return to the previous depth where the focus is located in '5', the user can shake the terminal forward (or inward) once.

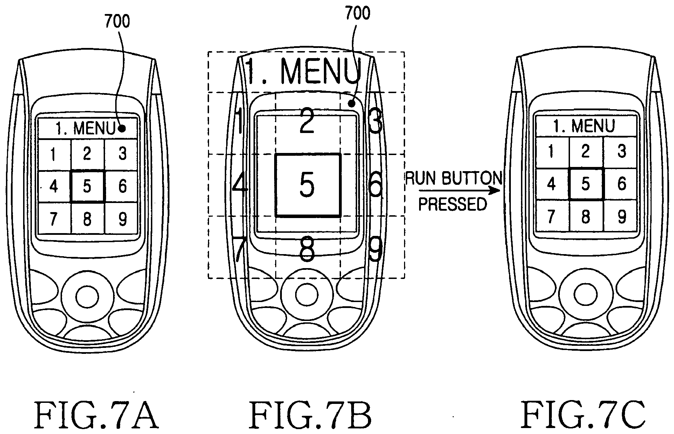

FIGs. 7A through 7C are diagrams illustrating a fifth menu navigation method according to the present invention. If a user slowly lifts up a terminal in a state where a focus is located in '5' as shown in FIG. 7A, the menu screen is zoomed in as shown in FIG. 7B. In this case, the menu screen is zoomed in centering on '5' where the focus is located, in order to prevent the focus from going out of the menu screen due to the zoom-in. In this state, if the user presses a Run button, the menu screen is zoomed out to its original menu screen as shown in FIG. 7C. Although not illustrated, similarly, the user can zoom out the menu screen by lowering down the terminal slowly, and zoom in the menu screen to its original menu screen by pressing the Run button. This menu navigation method allows the user to freely zoom in/out the menu screen when the menu fonts are excessively small or the menu screen is excessively large.

In FIGs. 7A and 7B, reference numeral 700 denotes an indicator used for indicating activation/inactivation of an inertial sensor (not shown) to inform the user whether the motion-controlled menu navigation is available. Although the indicator 700 is included only in the terminal shown in FIGs. 7A and 7B, it can also be included in the terminals shown in FIGs. 3A through 6C. Herein, the term "menu" refers to all of such elements as images and characters constituting the corresponding menu.

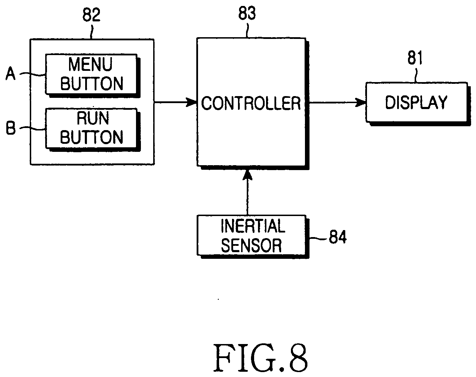

FIG. 8 is a block diagram illustrating a structure of a menu display apparatus in a mobile communication terminal according to the present invention. A menu display apparatus for use in a mobile communication terminal includes a display 81, a user interface 82, an inertial sensor 84 for instantaneously sensing a motion of the terminal, and a controller 83 for displaying a menu screen on the display 81 in response to a first input sensed by the user interface 82 and shifting a focus on the menu screen displayed on the display 81 according to a motion of the terminal sensed by the inertial sensor 84. Herein, the menu screen can support every kind of menus available in the mobile communication terminal.

If the inertial sensor 84 senses that the terminal turns counterclockwise or clockwise, the controller 83 shifts a focus displayed on the menu screen, in the corresponding direction. If the inertial sensor 84 senses that the terminal is shaken upward, the controller 83 displays an upper menu of a menu item where the focus is currently located. If the inertial sensor 84 senses that the terminal is shaken downward, the controller 83 displays a lower menu of a menu item where the focus is currently located. If the inertial sensor 84 senses that the terminal is lifted up slowly, the controller 83 zooms in the menu screen currently being displayed on the display 81. If the inertial sensor 84 senses that the terminal is lowered down slowly, the controller 83 zooms out the menu screen currently being displayed on the display 81. Further, the controller 83 zooms out/in (or de-zooms) the zoomed-in/out menu screen to its original menu screen in response to a second input sensed by the user interface 82. Herein, the user interface 82 senses the second input when a Run button B is pressed for a short time. The Run button B is provided to activate/inactivate the inertial sensor 84. Herein, the phrase "original menu screen" refers to the menu screen that was displayed on the display 81 in response to the first input sensed by the user interface 82. The first input sensed by the user interface 82 means pressing a menu button A or inputting a particular sign. The "particular sign" refers to every kind of character available in the mobile communication terminal, including English characters, Alphabetical characters, special characters, numbers, and so on.

In addition, if the inertial sensor 84 senses that the terminal is tilted leftward, the controller 83 shifts the focus to an item on the left of the menu item where the focus is currently located. If the inertial sensor 84 senses that the terminal is tilted rightward, the controller 83 shifts the focus to an item on the right of the menu item where the focus is currently located. If the inertial sensor 84 senses that the terminal is tilted upward, the controller 83 shifts the focus to an item above the menu item where the focus is currently located. If the inertial sensor 84 senses that the terminal is tilted downward, the controller 83 shifts the focus to an item below the menu item where the focus is currently located.

Further, if the inertial sensor 84 senses that the terminal is tilted leftward, rightward, upward or downward, the controller 83 tilts the full menu screen in the corresponding direction.

The user interface 82 further includes an indicator (not shown). The indicator is provided to indicate activation/inactivation of the inertial sensor 84 to inform the user whether the motion-controlled menu navigation is available. For example, the indicator can be one of the icons displayed on the top of a screen of the display 81 to indicate a state of the terminal.

The inertial sensor 84 is a sensor for measuring motion information of an object using the force of inertia. The inertial sensor 84 may include an acceleration sensor for measuring acceleration to calculate a change in position of an object, and an angular velocity sensor, a so-called gyroscope, for measuring an angular velocity to calculate a change in rotation angle. Although the acceleration sensor and the angular velocity sensor can be used in the following manner for implementation of the present invention, the sensors do not comprise the inventive element of the present invention.

Because the menu navigation is based on a motion in a three-dimensional space of up/down, front/rear and left/right directions, a moving track of an object can be calculated using a 3-axis angular velocity sensor. Although the angular velocity sensor can measure both acceleration of gravity and motion acceleration, because only the motion acceleration is an acceleration component caused by a motion of the terminal, a moving track of the terminal in the three-dimensional space can be calculated by double-integrating the motion acceleration. Therefore, a process of removing the acceleration-of-gravity component from the measured acceleration should precede other processes. When a terminal is moved, the posture of the terminal is scarcely subject to change. In this case, therefore, it can be considered that the acceleration-of-gravity component measured by the acceleration sensor is also almost constant. Because the terminal might remain stopped immediately before its movement, the acceleration measured at that time may include only the acceleration-of-gravity component. If the terminal starts moving, the measured acceleration may include both the motion acceleration and the acceleration of gravity. It is possible to obtain only the motion acceleration by previously storing the acceleration-of-gravity component measured when the terminal remains stopped, and then subtracting it from the acceleration measured after movement of the terminal.

During menu navigation, a moving track of the terminal in the up/down and left/right directions can be calculated using a 2-axis angular velocity sensor. A user's motion of shifting a terminal held in his/her hand in the up/down and left/right direction is equivalent to a rotational motion centered on the shoulder or the elbow. In this case, therefore, the movement of the terminal in the up/down and left/right directions can be found by calculating a rotation angle by integrating an angular velocity once. To calculate the up/down movement, the angular velocity sensor is arranged such that it can measure pitch. To calculate the left/right movement, the angular velocity sensor is arranged such that it can measure yaw.

The controller 83 finds a moving track of the terminal by processing the values obtained by the angular velocity sensor and/or the acceleration sensor.

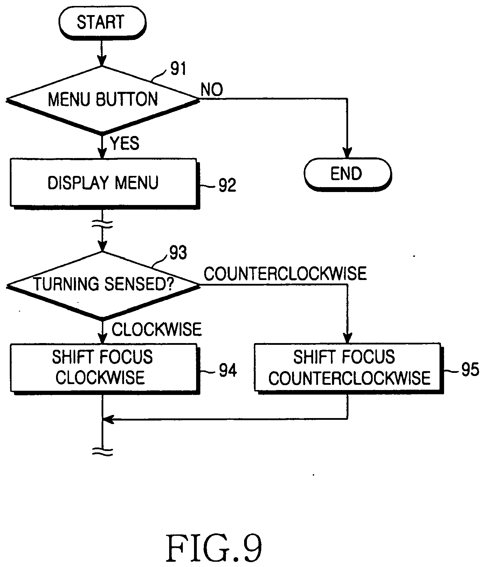

FIG. 9 is a flowchart illustrating a first menu navigation method according to the present invention. If a user presses a menu button A using a user interface 82, a controller 83 senses the pressing of the menu button A in step 91, and displays in step 92 a menu screen in which a focus is located in '1' by default, as shown in FIG. 3A. At this point, if the user turns the terminal counterclockwise or clockwise, an inertial sensor 84 senses the turning motion of the terminal. The controller 83 determines in step 93 whether the terminal has turned counterclockwise or clockwise. If it is determined that the terminal has turned clockwise, the controller 83 shifts the focus clockwise in step 94. However, if it is determined that the terminal has turned counterclockwise, the controller 83 shifts the focus counterclockwise in step 95, as shown in FIG. 3B in which the focus is located in '2'.

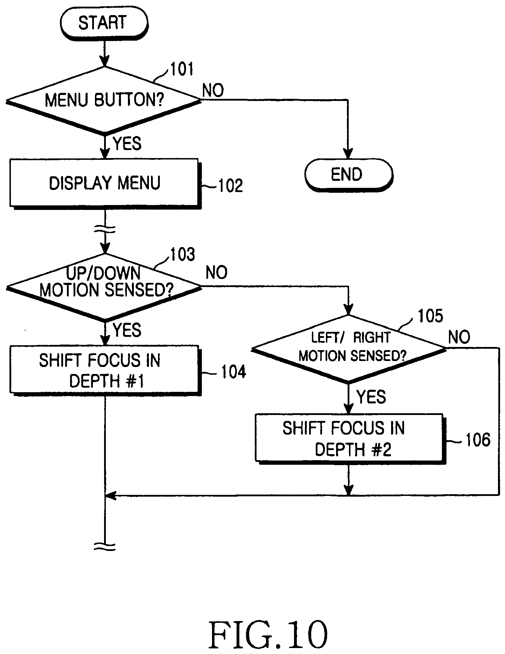

FIG. 10 is a flowchart illustrating a second menu navigation method according to the present invention. Referring to FIG. 10, if a user presses a menu button A using a user interface 82, a controller 83 senses the pressing of the menu button A in step 101, and displays in step 102 a menu screen in which a focus is located in '1' by default, as shown in FIG. 4A. At this point, if the user shakes the terminal upward/downward once, an inertial sensor 84 senses the shaking motion of the terminal. The controller 83 determines in step 103 whether the terminal is shaken up/down. If it is determined that the terminal is shaken up/down, the controller 83 shifts up/down the focus in a depth #1 in step 104. For example, if the user shakes the terminal downward once as shown in FIG. 4A in which the focus is located in '1' (circled-'1'), the controller 83 shifts the focus to '2' as shown in FIG. 4B. This depth-#1 focus shifting accomplishes focus shifting between main menus.

If it is determined in step 103 that the terminal is not shaken up/down, the controller 83 determines in step 105 whether the terminal is shaken left/right. If it is determined that the terminal is shaken left/right, the terminal 83 shifts left/right the focus in a depth #2 in step 106. For example, if the user shakes the terminal rightward once as shown in FIG. 4B in which where the focus is located in '1' (squared-'1'), the terminal shifts the focus to '2' as shown in FIG. 4C. This depth-#2 focus shifting achieves focus shifting between items in a submenu of the main menu indicated by a circled-'2'.

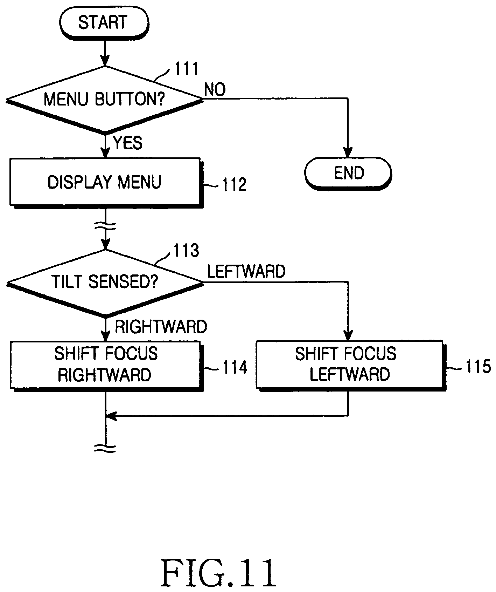

FIG. 11 is a flowchart illustrating a third menu navigation method according to the present invention. If a user presses a menu button A using a user interface 82, a controller 83 senses the pressing of the menu button A in step 111, and displays in step 112 a menu screen in which a focus is located in '5' by default, as shown in FIG. 5A. At this point, if the user tilts the terminal leftward/rightward, an inertial sensor 84 senses the tilting motion of the terminal. The controller 83 determines in step 113 whether the terminal is tilted leftward or rightward. If it is determined that the terminal is tilted rightward, the controller 83 shifts the focus to '6' in step 114 as shown in FIG. 5B. However, if it is determined that the terminal is tilted leftward, the controller 83 shifts the focus to '4' in step 115 as shown in FIG. 5C.

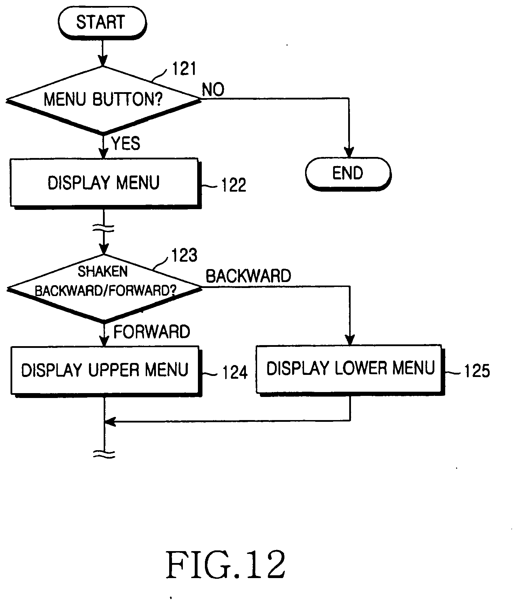

FIG. 12 is a flowchart illustrating a fourth menu navigation method according to the present invention. If a user presses a menu button A using a user interface 82, a controller 83 senses the pressing of the menu button A in step 121, and displays in step 122 a menu screen in which a focus is located in '5' by default, as shown in FIG. 6A. At this point, if the user shakes the terminal backward (outward) forward (inward) once, an inertial sensor 84 senses the shaking motion of the terminal. The controller 83 determines in step 123 whether the terminal is shaken backward or forward. If it is determined that the terminal is shaken backward, the controller 83 displays submenus of a main menu #5 in step 125 as shown in FIG. 6B. In other words, the terminal goes to the next (lower) depth. However, if it is determined that the terminal is shaken forward, the controller 83 goes back to the previous depth. For example, if the user shakes the terminal forward once as shown in FIG. 6B, the controller 83 displays in step 124 an upper menu in which the focus is located in '5' as shown in FIG. 6C.

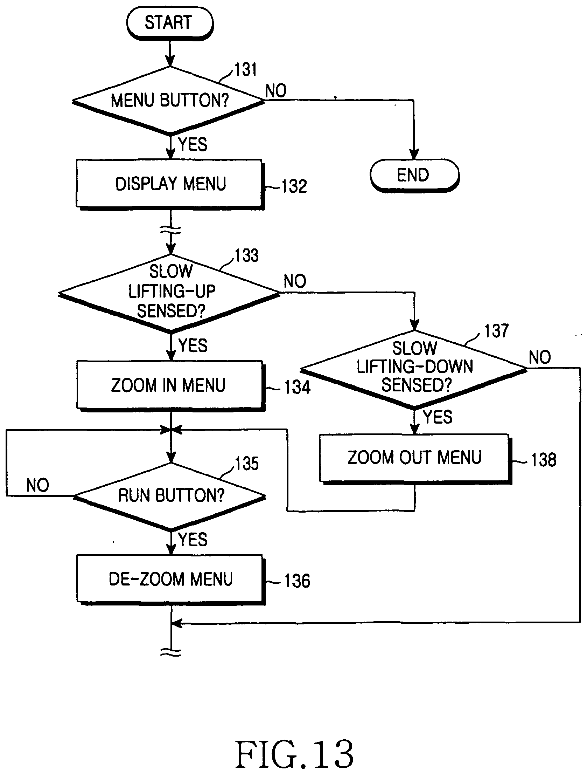

FIG. 13 is a flowchart illustrating a fifth menu navigation method according to the present invention. If a user presses a menu button A using a user interface 82, a controller 83 senses the pressing of the menu button A in step 131, and displays in step 132 a menu screen in which a focus is located in '5' by default, as shown in FIG. 7A. At this point, if the user lifts up the terminal slowly, an inertial sensor 84 senses the lifting motion of the terminal. The controller 83 determines in step 133 whether the terminal is lifted up slowly. If it is determined that the terminal is lifted up slowly, the controller 83 zooms in the menu screen in step 134 as shown in FIG 7B. In this case, the menu screen is zoomed in centering on '5' where the focus is located, in order to prevent the focus from going out of the menu screen due to the zoom-in. However, if it is determined in step 133 that the terminal is not lifted up slowly, the controller 83 determines in step 137 whether the terminal is lowered down slowly. If it is determined that the terminal is lowered down slowly, the controller 83 zooms out the menu screen in step 138. In the state where the menu screen is zoomed in/out, the controller 83 determines in step 135 whether a Run button B is pressed. If the Run button B is pressed, the controller 83 zooms out/in (or de-zooms) the zoomed-in/out menu screen to its original menu screen. For example, if the user presses the Run button B in the state where the menu screen is zoomed in as shown in FIG. 7B, the controller 83 zooms out the zoomed-in menu screen to its original menu screen as shown in FIG. 7C.

In FIGs. 9 through 13, a mark '≈' indicates the necessity that a corresponding motion should be sensed in a state where a particular menu screen is displayed. For example, in FIG. 9, the upper mark '≈' indicates that the turning motion in step 93 should necessarily be detected immediately after the initial menu screen is displayed. The lower mark '≈' indicates that it is not possible to expect which motion will be sensed after the focus shifting in steps 94 and 95. For example, it indicates the possibility that after the clockwise focus shifting in step 94, the menu screen zooming operation of FIG. 13 can be performed.

The present invention can also be applied to all other menu screens available in the terminal, allowing the user to experience various interactions. In addition, the present invention enables the user to zoom in/out the menu screen through his/her correlative motion. Further, the present invention also provides the motion-controlled menu navigation in addition to the existing button-controlled menu navigation, increasing the number of user options.

Herein, all of the moving/shifting directions are relative directions based on the mobile communication terminal.

As can be understood from the foregoing description, the present invention allows the user to perform menu navigation through correlative motions instead of button pressing. Therefore, the present invention provides correlation between a user's motion and actual focus shifting on the menu screen, allowing the user to simply comprehend the focus shifting and experience new interaction.

While the invention has been shown and described with reference to a certain preferred embodiment thereof, it will be understood by those skilled in the art that various changes in form and details may be made therein without departing from the scope of the invention as defined by the appended claims.

## Claims

1. An apparatus for controlling menu navigation in a terminal, the apparatus comprising:
a display (81) for displaying a menu screen;
a user interface (82);
an inertial sensor (84) for instantaneously sensing a motion of the terminal; and
a controller (83) for displaying the menu screen on the display in response to a first input sensed by the user interface, and shifting a focus on the menu screen displayed on the display in a direction corresponding to the motion of the terminal sensed by the inertial sensor,
wherein the controller (83) is adapted to:
display a lower menu of the menu item where the focus is currently located if the motion of the terminal sensed by the inertial sensor indicates that the terminal is shaken backward, and
display an upper menu of a menu item where the focus is currently located if the motion of the terminal sensed by the inertial sensor indicates that the terminal is shaken forward.

2. The apparatus of claim 1, wherein the controller is adapted to shift the focus on the menu screen clockwise if the motion of the terminal sensed by the inertial sensor indicates that the terminal turns clockwise, and shift the focus on the menu screen counterclockwise if the motion of the terminal sensed by the inertial sensor indicates that the terminal turns counterclockwise.

3. The apparatus of one of claims 1 to 2, wherein the controller is adapted to zoom in the menu screen if the motion of the terminal sensed by the inertial sensor indicates that the terminal is lifted up slowly, and zoom out the menu screen if the motion of the terminal sensed by the inertial sensor indicates that the terminal is lifted down slowly.

4. The apparatus of claim 3, wherein the controller is adapted to zoom out a zoomed-in menu screen and zoom-in a zoomed-out menu screen to its original menu screen in response to a second input sensed by the user interface.

5. The apparatus of one of claims 1 to 4, wherein the controller is adapted to shift the focus to an item to the left of a menu item where the focus is currently located, if the motion of the terminal sensed by the inertial sensor indicates that the terminal is tilted leftward, and shift the focus to an item to the right of the menu item where the focus is currently located if the motion of the terminal sensed by the inertial sensor indicates that the terminal is tilted rightward.

6. The apparatus of claim 5, wherein the controller is adapted to shift the focus to an item positioned, in the menu, above a menu item where the focus is currently located if a motion of the terminal sensed by the inertial sensor indicates that the terminal is tilted upward, and shift the focus to an item positioned, in the menu, below the menu item where the focus is currently located if a motion of the terminal sensed by the inertial sensor indicates that the terminal is tilted downward.

7. The apparatus of one of claims 1 to 6, wherein the controller is adapted to tilt the full menu screen in a direction corresponding to a motion of the terminal sensed by the inertial sensor.

8. A method for controlling menu navigation in a terminal that displays a menu screen, the method comprising the steps of:
displaying a menu screen on the display of the terminal in response to a first input sensed by a user interface of the terminal;
shifting a focus on the menu screen displayed on the display in a direction corresponding to the motion of the terminal sensed by an inertial sensor, comprising:
displaying a lower menu of the menu item where the focus is currently located, upon detecting a motion of the terminal indicating that the terminal is shaken backward in a menu-displayed state
displaying an upper menu of the menu item where the focus is currently located, upon detecting a motion of the terminal indicating that the terminal is shaken forward in the menu-displayed state.

9. The method of claim 8, further comprising:
shifting (94) a focus clockwise upon detecting a motion of the terminal indicating that the terminal turns clockwise in a menu-displayed state; and
shifting (95) the focus counterclockwise upon detecting a motion of the terminal indicating that the terminal turns counterclockwise in the menu-displayed state.

10. The method of claim 8, further comprising the steps of:
zooming in (134) the menu screen upon detecting a motion of the terminal indicating that the terminal is lifted up slowly in a menu-displayed state; and
zooming out (138) the menu screen upon detecting a motion of the terminal indicating that the terminal is lowered down slowly in the menu-displayed state.

11. The method of claim 10, further comprising the step of zooming out a zoomed-in menu screen and zooming-in a zoomed out menu screen to its original menu screen upon detecting a predetermined user input signal.

## Patentansprüche

1. Vorrichtung zum Steuern von Menü-Navigation in einem Endgerät, wobei die Vorrichtung umfasst:
eine Anzeigeeinrichtung (81) zum Anzeigen eines Menü-Bildschirms;
eine Benutzeroberfläche (82);
einen Trägheitssensor (84) zum unmittelbaren Erfassen einer Bewegung des Endgerätes; sowie
eine Steuereinrichtung (83) zum Anzeigen des Menü-Bildschirms auf der Anzeigeeinrichtung in Reaktion auf eine erste Eingabe, die durch die Benutzeroberfläche erfasst wird, und zum Verschieben eines Fokus auf dem auf der Anzeigeeinrichtung angezeigten Menü-Bildschirm in einer Richtung, die der durch den Trägheitssensor erfassten Bewegung des Endgerätes entspricht,
wobei die Steuereinrichtung (83) so eingerichtet ist, dass sie:
ein unteres Menü des Menüpunktes anzeigt, an dem sich der Fokus aktuell befindet, wenn die durch den Trägheitssensor erfasste Bewegung des Endgerätes darauf hinweist, dass das Endgerät nach hinten geschüttelt wird, und
ein oberes Menü eines Menüpunktes anzeigt, an dem sich der Fokus aktuell befindet, wenn die durch den Trägheitssensor erfasste Bewegung des Endgerätes darauf hinweist, dass das Endgerät nach vorn geschüttelt wird.

2. Vorrichtung nach Anspruch 1, wobei die Steuereinrichtung so eingerichtet ist, dass sie den Fokus auf dem Menü-Bildschirm im Uhrzeigersinn verschiebt, wenn die durch den Trägheitssensor erfasste Bewegung des Endgerätes darauf hinweist, dass sich das Endgerät im Uhrzeigersinn dreht, und den Fokus auf dem Menübildschirm entgegen dem Uhrzeigersinn verschiebt, wenn die durch den Trägheitssensor erfasste Bewegung des Endgerätes darauf hinweist, dass sich das Endgerät entgegen dem Uhrzeigersinn dreht.

3. Vorrichtung nach einem der Ansprüche 1 bis 2, wobei die Steuereinrichtung so eingerichtet ist, dass sie in den Menü-Bildschirm hineinzoomt, wenn die durch den Trägheitssensor erfasste Bewegung des Endgerätes darauf hinweist, dass das Endgerät langsam angehoben wird, und aus dem Menü-Bildschirm herauszoomt, wenn die durch den Trägheitssensor erfasste Bewegung des Endgerätes darauf hinweist, dass das Endgerät langsam abgesenkt wird.

4. Vorrichtung nach Anspruch 3, wobei die Steuereinrichtung so eingerichtet ist, dass sie in Reaktion auf eine durch die Benutzerschnittstelle erfasste zweite Eingabe zu dem ursprünglichen Menü-Bildschirm aus einem eingezoomten Menü-Bildschirm herauszoomt und in einen herausgezoomten Menü-Bildschirm hineinzoomt.

5. Vorrichtung nach einem der Ansprüche 1 bis 4, wobei die Steuereinrichtung so eingerichtet ist, dass sie den Fokus auf einen Punkt links von einem Menü-Punkt verschiebt, an dem sich der Fokus aktuell befindet, wenn die durch den Trägheitssensor erfasste Bewegung des Endgerätes darauf hinweist, dass das Endgerät nach links geneigt wird, und den Fokus zu einem Punkt rechts von dem Menüpunkt verschiebt, an dem sich der Fokus aktuell befindet, wenn die durch den Trägheitssensor erfasste Bewegung des Endgerätes darauf hinweist, dass das Endgerät nach rechts geneigt wird.

6. Vorrichtung nach Anspruch 5, wobei die Steuereinrichtung so eingerichtet ist, dass sie den Fokus zu einem Punkt verschiebt, der in dem Menü oberhalb eines Menü-Punktes positioniert ist, an dem sich der Fokus aktuell befindet, wenn eine durch den Trägheitssensor erfasste Bewegung des Endgerätes darauf hinweist, dass das Endgerät nach oben geneigt wird, und den Fokus zu einem Punkt verschiebt, der in dem Menü unterhalb des Menü-Punktes positioniert ist, an dem sich der Fokus aktuell befindet, wenn eine durch den Trägheitssensor erfasste Bewegung des Endgerätes darauf hinweist, dass das Endgerät nach unten geneigt wird.

7. Vorrichtung nach einem der Ansprüche 1 bis 6, wobei die Steuereinrichtung so eingerichtet ist, dass sie den gesamten Menü-Bildschirm in einer Richtung neigt, die einer durch den Trägheitssensor erfassten Bewegung des Endgerätes entspricht.

8. Verfahren zum Steuern von Menü-Navigation in einem Endgerät, das einen Menü-Bildschirm anzeigt, wobei das Verfahren die folgenden Schritte umfasst:
Anzeigen eines Menü-Bildschirms auf der Anzeigeeinrichtung des Endgerätes in Reaktion auf eine durch eine Benutzeroberfläche des Endgerätes erfasste erste Eingabe;
Verschieben eines Fokus auf dem auf der Anzeigeeinrichtung angezeigten Menü-Bildschirm in einer Richtung, die der durch einen Trägheitssensor erfassten Bewegung des Endgerätes entspricht, wobei dies umfasst:
Anzeigen eines unteren Menüs des Menüpunktes, an dem sich der Fokus aktuell befindet, wenn eine Bewegung des Endgerätes erfasst wird, die darauf hinweist, dass das Endgerät in einem Zustand, in dem das Menü angezeigt wird, nach hinten geschüttelt wird.
Anzeigen eines oberen Menüs des Menüpunktes, an dem sich der Fokus aktuell befindet, wenn eine Bewegung des Endgerätes erfasst wird, die darauf hinweist, dass das Endgerät in dem Zustand, in dem das Menü angezeigt wird, nach vorn geschüttelt wird.

9. Verfahren nach Anspruch 8, das des Weiteren umfasst:
Verschieben (94) eines Fokus im Uhrzeigersinn, wenn eine Bewegung des Endgerätes erfasst wird, die darauf hinweist, dass sich das Endgerät in einem Zustand, in dem das Menü angezeigt wird, im Uhrzeigersinn dreht; und
Verschieben (95) des Fokus entgegen dem Uhrzeigersinn, wenn eine Bewegung des Endgerätes erfasst wird, die darauf hinweist, dass sich das Endgerät in dem Zustand, in dem das Menü angezeigt wird, entgegen dem Uhrzeigersinn dreht.

10. Verfahren nach Anspruch 8, das des Weiteren die folgenden Schritte umfasst.
Hineinzoomen (134) in den Menü-Bildschirm beim Erfassen einer Bewegung des Endgerätes, die darauf hinweist, dass das Endgerät in einem Zustand, in dem das Menü angezeigt wird, langsam angehoben wird; und
Herauszoomen (138) aus dem Menü-Bildschirm beim Erfassen einer Bewegung des Endgerätes, die darauf hinweist, dass das Endgerät in dem Zustand, in dem das Menü angezeigt wird, langsam abgesenkt wird.

11. Verfahren nach Anspruch 10, das des Weiteren den Schritt des Herauszoomens aus einem eingezoomten Menü-Bildschirm sowie des Hineinzoomens in einen herausgezoomten Menü-Bildschirm auf seinen ursprünglichen Menü-Bildschirm beim Erfassen eines vorgegebenen Benutzer-Eingabesignals umfasst.

## Revendications

1. Dispositif pour contrôler une navigation dans un menu dans un terminal, le dispositif comprenant :
un affichage (81) pour afficher un écran de menu ;
une interface d'utilisateur ;
un capteur inertiel (84) pour détecter instantanément un mouvement du terminal ; et
un contrôleur (83) pour afficher l'écran de menu sur l'affichage en réaction à une première entrée détectée par l'interface d'utilisateur, et basculer un focus (activation) sur l'écran de menu affiché sur l'affichage dans une direction correspondant au mouvement du terminal détecté par le capteur inertiel,
dans lequel le contrôleur (83) est adapté pour :
afficher un menu inférieur de l'élément de menu sur lequel le focus est couramment placé si le mouvement du terminal détecté par le capteur inertiel indique que le terminal est agité vers l'arrière, et
afficher un menu supérieur d'un élément de menu sur lequel le focus est couramment placé si le mouvement du terminal détecté par le capteur inertiel indique que le terminal est agité vers l'avant.

2. Le dispositif de la revendication 1, dans lequel le contrôleur est adapté pour basculer le focus sur l'écran de menu dans le sens horaire si le mouvement du terminal détecté par le capteur inertiel indique que le terminal tourne dans le sens horaire, et basculer le focus sur l'écran de menu dans le sens anti-horaire si le mouvement du terminal détecté par le capteur inertiel indique que le terminal tourne dans le sens anti-horaire.

3. Le dispositif d'une des revendications 1 à 2, dans lequel le contrôleur est adapté pour effectuer un zoom avant sur l'écran de menu si le mouvement du terminal détecté par le capteur inertiel indique que le terminal est levé lentement, et un zoom arrière sur l'écran de menu si le mouvement du terminal détecté par le capteur inertiel indique que le terminal est abaissé lentement.

4. Le dispositif de la revendication 3, dans lequel le contrôleur est adapté pour effectuer un zoom arrière sur un écran de menu ayant fait l'objet d'un zoom avant et effectuer un zoom avant sur un écran de menu ayant fait l'objet d'un zoom arrière vers son écran de menu d'origine en réaction à une deuxième entrée détectée par l'interface d'utilisateur.

5. Le dispositif de l'une des revendications 1 à 4, dans lequel le contrôleur est adapté pour basculer le focus vers un élément à la gauche d'un élément de menu sur lequel le focus est couramment placé, si le mouvement du terminal détecté par le capteur inertiel indique que le terminal est incliné vers la gauche, et
basculer le focus vers un élément à la droite de l'élément de menu sur lequel le focus est couramment placé si le mouvement du terminal détecté par le capteur inertiel indique que le terminal est incliné vers la droite.

6. Le dispositif de la revendication 5, dans lequel le contrôleur est adapté pour basculer le focus sur un élément positionné, dans le menu, au-dessus d'un élément de menu sur lequel le focus est couramment placé si un mouvement du terminal détecté par le capteur inertiel indique que le terminal est incliné vers l'avant, et basculer le focus vers un élément positionné, dans le menu, au-dessous de l'élément de menu sur lequel le focus est couramment placé si un mouvement du terminal détecté par le capteur inertiel indique que le terminal tourne est incliné vers l'arrière.

7. Le dispositif de l'une des revendications 1 à 6, dans lequel le contrôleur est adapté pour basculer l'écran de menu complet dans une direction correspondant à un mouvement du terminal détecté par le capteur inertiel.

8. Procédé pour contrôler une navigation dans un menu dans un terminal qui affiche un écran de menu, le procédé comprenant les étapes de :
affichage d'un écran de menu sur l'affichage du terminal en réaction à une première entrée détectée par une interface d'utilisateur du terminal ;
basculement d'un focus (activation) sur l'écran de menu affiché sur l'affichage dans une direction correspondant au mouvement du terminal détecté par un capteur inertiel, comprenant :
affichage d'un menu inférieur de l'élément de menu sur lequel le focus est couramment placé, sur détection d'un mouvement du terminal indiquant que le terminal est agité vers l'arrière dans un état d'affichage de menu
affichage d'un menu supérieur de l'élément de menu sur lequel le focus est couramment placé, sur détection d'un mouvement du terminal indiquant que le terminal est agité vers l'avant dans l'état d'affichage de menu.

9. Le procédé de la revendication 8, comprenant en outre :
basculement (94) d'un focus dans le sens horaire sur détection d'un mouvement du terminal indiquant que le terminal tourne dans le sens horaire dans un état d'affichage de menu ; et
basculement (95) d'un focus dans le sens anti-horaire sur détection d'un mouvement du terminal indiquant que le terminal tourne dans le sens anti-horaire dans l'état d'affichage de menu.

10. Le procédé de la revendication 8, comprenant en outre les étapes de :
zoom avant (134) sur l'écran de menu sur détection d'un mouvement du terminal indiquant que le terminal est levé lentement dans un état d'affichage de menu ; et
zoom arrière (138) sur l'écran de menu sur détection d'un mouvement du terminal indiquant que le terminal est abaissé lentement dans l'état d'affichage de menu.

11. Le procédé de la revendication 10, comprenant en outre l'étape de zoom arrière sur un écran de menu ayant fait l'objet d'un zoom avant et de zoom avant sur un écran de menu ayant fait l'objet d'un zoom arrière vers son écran de menu d'origine sur détection d'un signal d'entrée d'utilisateur prédéterminé.
